# EUROPEAN PATENT SPECIFICATION

(11) **EP 0 552 693 B1**
(45) Date of publication and mention of the grant of the patent: **08.09.1999**
(21) Application number: 93100616.7
(22) Date of filing: 16.01.1993
(51) Int. Cl.: H04L 27/34

(54) **Method and system for controlling the minimal distance between successive errors in digital radio transmission**
Verfahren und System zur Beschränkung des minimalen Abstands zwischen aufeinanderfolgenden Fehlern bei digitaler Funkübertragung
Procédé et système pour contrôler la distance minimale entre les erreurs successives dans une transmission numérique radio

(30) Priority: 22.01.1992 IT MI109
(43) Date of publication of application: 28.07.1993
(73) Proprietor: ALCATEL, 75008 Paris (FR)
(72) Inventor: Bolla, Maurizio, I-20152 Milano (IT); Pellizzoni, Roberto, I-22063 Cantu' (Co) (IT); Spalvieri, Arnaldo, I-60019 Senigallia (IT)
(74) Representative: Knecht, Ulrich Karl, Dipl.-Ing.

(56) References cited:
- GB-A- 2 142 806
- US-A- 4 630 286
- US-A- 4 677 626
- IEEE TRANSACTIONS ON VEHICULAR TECHNOLOGY vol. 39, no. 1 , February 1990 , NEW YORK US pages 37 - 47 XP128232 A.C.M. LEE / P.J. MCLANE: 'Convolutionally Interleaved PSK and DPSK Trellis Codes for Shadowed, Fast Fading Mobile Satellite Communication Channels.'

## Description

### Background of the invention

The present invention relates to a method of controlling the minimal distance between successive errors in digital radio transmission, said distance being the number of correct bits between two successive incorrect bits, the method comprising the steps of: in transmission, splitting up a serial signal into first parallel signal flows; multi-level modulating the said first parallel signal flows and transmitting the modulated signal over a transmission channel; in reception, demodulating the modulated signal received via said transmission channel, so obtaining second parallel signal flows, each of said second parallel signal flows corresponding to one of said first parallel signal flows; reconverting the demodulated signal into a unique serial flow.
The invention relates also to a corresponding system for controlling the minimal distance between successive errors in digital radio transmission.

### Description of prior art

High capacity digital radio transmissions use multilevel modulations as a rule. The bit flow at the input of the modulator is converted into n parallel flows, depending on the type of modulation, and is transmitted in the channel in the form of 2ⁿ - ary symbols.
An eventual error occurring on the channel affects the 2ⁿ - ary symbol; when parallel flows are re-converted into a unique binary flow, the channel error reveals itself in a set of errors which affect up to n successive bits.
Because of the various needs it can be necessary to provide that these errors are spaced out in time and are not left concentrated in n successive bits.
In order to oppose these error sets on the serial flow it is usual to use particular error correction codes or interleaving techniques, as described for example in US-A-4677626 where a self-synchronizing interleaver for trellis encoder used in wireline modems is disclosed, having on the transmission side a randomizer, a QAM encoder, a QAM modulator and a convolution encoder.
Both error correction codes and interleaving techniques have however a high circuit complexity and need anything but simple decoding techniques.

### Summary of the invention

An object of the present invention is to provide a simple method which allows to space out in time the error on serial flow, thus avoiding groups of close, if not consecutive, errors.
The proposed method has the advantage of being easily implementable, with the use of extremely reduced hardware with respect to the known techniques.
It is characterized in that, as described in claim 1, it comprises the steps of: in transmission, applying a first differential delay to each of the first parallel signal flows, said first differential delay being different from flow to flow; in reception, applying a second differential delay to the second parallel signal flows, the sum of said second differential delay and said first differential delay being constant and equal for corresponding flows of said first parallel signal flows and second parallel signal flows, the value of said sum controlling said minimal distance. A further object of the present invention is to provide a corresponding simple system, as described in claim 4.

### General solution

The solution according to the invention is based upon the introduction of a different delay on each of the n parallel flows which compose the symbol transmitted into the channel.
If Δ = nd is the minimal distance which one wants to obtain between two successive errors on the serial flow, the delays are introduced respectively

| |
|---|
| Δo = 0 d T on the first flow |
| Δ1 = 1 d T on the second flow |
| Δ2 = 2 d T on the third flow |
| Δn - 1 = (n - 1) dT on the nth flow, where T is symbol time . |

In reception,differentiated delays are introduced in a complementary way with respect to transmission, i.e.

| |
|---|
| Δ n - 1 = (n - 1) dT on the first flow, |
| Δ n - 2 = (n - 2) dT on the second flow, |
| Δo = 0 d T on the nth flow. |

With this scheme,the possibility of having two errors on the serial flow at a distance less than nd is eliminated. In fact an error-on- the channel event, which as said may reveal itself in a set of at most n successive errors, thanks to differentiated delays will appear on the serial flow with incorrect bits at a distance greater than or equal to Δ = nd.

Obviously all above is true if only single errors on the channel are taken into consideration, but the probability of having pairs of successive errors is, in a first approximation, negligible as compared with the probability of having single errors.

In order to realize delays Δ k = kdT it is sufficient to use simple delay lines consisting of flip - flops, easily obtainable both in discrete and in integrated logic.

The proposed technique can he used for all the multilevel modulations, and by varying the parameter "d" the distances necessary to the requirement of the system can be obtained.

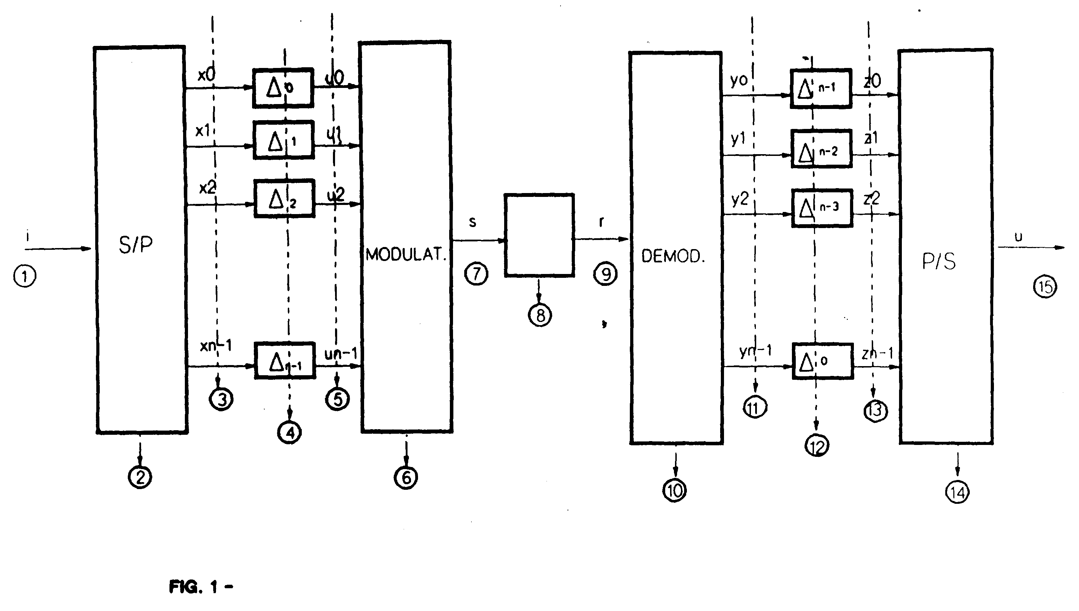

An example of use of the proposed technique is given by the transmission of an SDH signal, of the synchronous hierarchy, on a radio link.
The SDH frame contains special bits, called pointers, that give information on the synchronization of the frame itself. These bits are organized in two successive bytes of eight bits each and, when disturbed by three or more errors, a loss of synchronism of the system takes place, with catastrophic consequences on the quality of the link.Let us assume to transmit the SDH signal with a 32 - QAM modulation i.e. with n=5. The distance between serial errors is desired to be Δ > 16.
Since Δ = nd we obtain d = 4 . The five delays to be introduced on five flows will be then Δ o = 0, Δ 1 = 4T,Δ 2 = 8 T, Δ 3 = 12 T, Δ 4 = 16 T.
In this way the effect of single channel errors on the two bytes of pointers is completely eliminated thus improving the quality of the link.
The scheme of the proposed solution for a 2n level generic modulation is illustrated in detail (fig. 1).
Signal i from the source the series/parallel converter 2 through lines 1. At its output there are n parallel flows Xo, X1, ...., Xn - 1 (lines 3). To each flow Xi, the delay Δi indicated by reference numeral 4 is applied and the signals so obtained are fed to modulator 6 through lines 5.

The modulator generates the multilevel signal s and transmits it in channel 8 through line 7. The channel adds the eventual errors by providing signal r which is transmitted to demodulator 10 through line 9. The demodulator provides n flows Yo,.....Yn - (lines in which an eventual error reveals itself at the same time.
The delay Δ n-1-i , indicated with 12, complementary to the transmission one, is applied to each flow Yi.
Signals zi thus obtained are transmitted through lines 13 to the parallel/series converter 14 which provides the output u on the line 15.

## Claims

1. Method of controlling the minimal distance between successive errors in digital radio transmission, said distance being the number of correct bits between two successive incorrect bits, the method comprising the steps of:
- in transmission, splitting up a serial signal (i) into first parallel signal flows (X0, ...... Xn-1); multi-level modulating the said first parallel signal flows and transmitting the modulated signal (s) over a transmission channel (8);
- in reception, demodulating the modulated signal (r) received via said transmission channel, so obtaining second parallel signal flows (Y0, .... Yn-1), each of said second parallel signal flows corresponding to one of said first parallel signal flows; reconverting the demodulated signal into a unique serial flow (u),
characterized in that it further comprises the steps of:
- in transmission, applying a first differential delay (Δ0, .... Δn-1) to each of said first parallel signal flows (X0, ...... Xn-1), said first differential delay being different from flow to flow;
- in reception, applying a second differential delay (Δn-1, .... Δ0) to said second parallel signal flows (Y0, .... Yn-1), the sum of said second differential delay and said first differential delay being constant and equal for corresponding flows of said first parallel signal flows and second parallel signal flows, the value of said sum controlling said minimal distance.

2. Method of controlling the minimal distance between successive errors in digital radio transmission as in claim 1, characterized in that said first differential delay (Δ0, .... Δn-1) increases progressively from one flow to the following one according to an increasing law, and said second differential delay (Δn-1, .... Δ0) decreases progressively according to a complementary decreasing law.

3. Method of controlling the minimal distance between successive errors in digital radio transmission as in claim 2, characterized in that said increasing law applies delays increasing by the same fixed quantity "dT", being T the symbol time, and said minimal distance Δ = nd, being n the number of parallel flows.

4. System for controlling the minimal distance between successive errors in digital radio transmission, said distance being the number of correct bits between two successive incorrect bits, the system comprising:
- in transmission, means for converting (2) an input serial signal (i) into first parallel signal flows (X0, ...... Xn-1); means for multi-level modulating (6) the said first parallel signal flows and transmitting the modulated signal (s) over a transmission channel (8);
- in reception, means for demodulating (10) the modulated signal (r) received via said transmission channel (8), so obtaining second parallel signal flows (Y0, .... Yn-1), each of said second parallel signal flows corresponding to one of said first parallel signal flows; means for reconverting (14) the demodulated signal into a unique serial flow (u),
characterized in that it further comprises:
- in transmission, first delay means (4) for applying a first differential delay (Δ0, .... Δn-1) to each of said first parallel signal flows (X=, .... Xn-1), said first differential delay being different from flow to flow;
- in reception, second delay means (12) for applying a second differential delay (Δn-1, .... Δ0) to said second parallel signal flows (Y0, .... Yn-1), such that the sum of said second differential delay and said first differential delay is constant and equal for corresponding flows of said first parallel signal flows and second parallel signal flows, the value of said sum controlling said minimal distance.

5. System for controlling the minimal distance between successive errors in digital radio transmission as in claim 4, characterized in that said first delay means (4) apply said first differential delay (Δ0, .... Δn-1) increasing progressively from one flow to the following one according to an increasing law, and said second delay means (12) apply said second differential delay (Δn-1, .... Δ0) decreasing progressively according to a complementary decreasing law.

6. System for controlling the minimal distance between successive errors in digital radio transmission as in claim 5, characterized in that said increasing law applies delays increasing by the same fixed quantity "dT", being T the symbol time, and said minimal distance Δ = nd, being n the number of parallel flows.

## Patentansprüche

1. Verfahren zur Kontrolle des minimalen Abstandes zwischen aufeinanderfolgenden Fehlern bei der digitalen Funkübertragung, wobei der Abstand die Anzahl der korrekten Bits zwischen zwei aufeinanderfolgenden falschen Bits ist, und wobei das Verfahren die folgenden Schritte umfaßt:
- bei der Übertragung das Aufteilen eines seriellen Signals (i) in erste parallele Signalströme (X0, ......, Xn-1); die Mehrstufen-Modulation dieser ersten parallelen Signalströme und die Übertragung des modulierten Signals (s) über einen Übertragungskanal (8);
- bei dem Empfang die Demodulation des modulierten Signals (r), welches über den Übertragungskanal empfangen worden ist, um so zweite parallele Signalströme (Y0, ....., Yn-1) zu erhalten, wobei jeder der zweiten parallelen Signalströme einem der ersten parallelen Signalströme entspricht; Rück-Konvertieren des demodulierten Signals in einen einzigen seriellen Strom (u),
dadurch gekennzeichnet, daß die folgenden weiteren Schritte vorgesehen sind:
- bei der Übertragung das Anlegen einer ersten Differentialverzögerung (Δ0, .... Δn-1) an jeden der ersten parallelen Signalströme (X0, ......, Xn-1), wobei diese erste Differentialverzögerung von Strom zu Strom unterschiedlich ist;
- bei dem Empfang das Anlegen einer zweiten Differentialverzögerung (Δn-1, ...., Δ0) an die zweiten parallelen Signalströme (Y0, ....., Yn-1), wobei die Summe der zweiten Differentialverzögerung und der ersten Differentialverzögerung konstant ist und für entsprechende Ströme der ersten parallelen Signalströme und der zweiten parallelen Signalströme gleich ist, wobei der Wert der Summe den minimalen Abstand kontrolliert.

2. Verfahren nach Anspruch 1, dadurch gekennzeichnet, daß die erste Differentialverzögerung (Δ0, .... Δn-1) progressiv von einem der Ströme zum nächsten Strom ansteigt, und zwar gemäß einer Steigerungsregel, und daß die zweite Differentialverzögerung (Δn-1, .... Δ0) progressiv abfällt, und zwar gemäß einer entsprechenden Verringerungsregel.

3. Verfahren nach Anspruch 1, dadurch gekennzeichnet, daß die Steigerungsregel die Verzögerungen jeweils um den gleichbleibenden Betrag "dT" erhöht, wobei T die Zeit ist, der minimale Abstand Δ = nd ist, und n die Anzahl der parallelen Ströme ist.

4. System zur Kontrolle des minimalen Abstands zwischen aufeinanderfolgenden Fehlern bei der digitalen Funkübertragung, wobei der Abstand die Anzahl der korrekten Bits zwischen zwei aufeinanderfolgenden falschen Bits ist, und wobei das System umfaßt:
- für die Übertragung, eine Einrichtung (2) zum Konvertieren eines seriellen Signals (i) in erste parallele Signalströme (X0, ...... Xn-1); eine Einrichtung (6) zur Mehrstufen-Modulation dieser ersten parallelen Signalströme und zur Übertragung des modulierten Signals (s) über einen Übertragungskanal (8);
- für den Empfang, eine Einrichtung (10) zur Demodulation des modulierten Signals (r), welches über den Übertragungskanal (8) empfangen worden ist, um so zweite parallele Signalströme (Y0, ....., Yn-1) zu erhalten, wobei jeder der zweiten parallelen Signalströme einem der ersten parallelen Signalströme entspricht; eine Einrichtung (14) zum Zurückkonvertieren des demodulierten Signals in einen einzigen seriellen Strom (u),
dadurch gekennzeichnet, daß weiterhin vorgesehen sind:
- für die Übertragung, eine Einrichtung (4) zum Anlegen einer ersten Differentialverzögerung (Δ0, .... Δn-1) an jeden der ersten parallelen Signalströme (X0, ......, Xn-1), wobei diese erste Differentialverzögerung von Strom zu Strom unterschiedlich ist;
- für den Empfang, eine Einrichtung (12) zum Anlegen einer zweiten Differentialverzögerung (Δn-1, ...., Δ0) an die zweiten parallelen Signalströme (Y0, ....., Yn-1), wobei die Summe der zweiten Differentialverzögerung und der ersten Differentialverzögerung konstant ist und für entsprechende Ströme der ersten parallelen Signalströme und der zweiten parallelen Signalströme gleich ist, wobei der Wert der Summe den minimalen Abstand kontrolliert.

5. System nach Anspruch 4, dadurch gekennzeichnet, daß die Einrichtung (4) für die erste Verzögerung die erste Differentialverzögerung (Δ0, .... Δn-1) progressiv von einem der Ströme zum nächsten Strom erhöht, und zwar gemäß einer Steigerungsregel, und daß die Einrichtung (12) für die zweite Differentialverzögerung (Δn-1, .... Δ0) diese progressiv reduziert, und zwar gemäß einer komplementären Verringerungsregel.

6. System nach Anspruch 5, dadurch gekennzeichnet, daß die Steigerungsregel die Verzögerungen jeweils um den gleichbleibenden Betrag "dT" erhöht, wobei T die Zeit ist, der minimale Abstand Δ = nd ist, und n die Anzahl der parallelen Ströme ist.

## Revendications

1. Procédé de contrôle de la distance minimale entre des erreurs successives dans une transmission radio numérique, ladite distance étant le nombre de bits corrects entre deux bits incorrects successifs, le procédé comprenant les étapes consistant à :
- pendant la transmission, séparer un signal en série (i) en premiers courants de signaux en parallèle (X0, ... Xn-1) ; moduler à plusieurs niveaux lesdits premiers courants de signaux en parallèle et transmettre le signal modulé (s) sur un canal de transmission (8) ;
- pendant la réception, démoduler le signal modulé (r) reçu par l'intermédiaire dudit canal de transmission, de façon à obtenir des deuxièmes courants de signaux en parallèle, chacun desdits deuxièmes courants de signaux en parallèle correspondant à l'un desdits premiers courants de signaux en parallèle ; reconvertir le signal démodulé en un courant en série unique (u),
caractérisé en ce qu'il comporte en outre les étapes consistant à :
- pendant la transmission, appliquer un premier retard différentiel (Δ0, ... Δn-1) à chacun desdits premiers courants de signaux en parallèle (X0,...Xn-1), ledit retard différentiel étant différent d'un courant à un autre ;
- en réception, appliquer un deuxième retard différentiel (Δn-1, ... Δ0) auxdits deuxièmes courants de signaux en parallèle (Y0, ...Yn-1), la somme dudit deuxième retard différentiel et dudit premier retard différentiel étant constante et égale pour des courants correspondants desdits premiers courants de signaux en parallèle et deuxièmes courants de signaux en parallèle, la valeur de ladite somme contrôlant ladite distance minimale.

2. Procédé de contrôle de la distance minimale entre des erreurs successives dans une transmission radio numérique selon la revendication 1, caractérisé en ce que ledit premier retard différentiel (Δ0, ... Δn-1) augmente progressivement d'un courant au suivant en fonction d'une loi croissante et ledit deuxième retard différentiel (Δn-1, ...Δ0) diminue progressivement en fonction d'une loi décroissante complémentaire.

3. Procédé de contrôle de la distance minimale entre des erreurs successives dans une transmission radio numérique selon la revendication 2, caractérisé en ce que ladite loi croissante applique des retards croissants de la même quantité fixe "dT", T étant le symbole du temps et ladite distance minimale Δ=nd, n étant le nombre de courants en parallèle.

4. Système pour contrôler la distance minimale entre des erreurs successives dans une transmission radio numérique, ladite distance étant le nombre de bits corrects entre deux bits incorrects successifs, le système comprenant :
- pendant la transmission, des moyens pour convertir (2) un signal d'entrée en série (i) en premiers courants de signaux en parallèle (X0, ... Xn-1) ; des moyens pour moduler à plusieurs niveaux lesdits premiers courants de signaux en parallèle et transmettre le signal modulé (s) sur un canal de transmission (8) ;
- pendant la réception, des moyens pour démoduler (10) le signal modulé (r) reçu par l'intermédiaire dudit canal de transmission (8), de façon à obtenir des deuxièmes courants de signaux en parallèle (Y0, ... Yn-1), chacun desdits deuxièmes courants de signaux en parallèle correspondant à l'un desdits premiers courants de signaux en parallèle ; des moyens pour reconvertir le signal démodulé en un courant en série unique (u),
caractérisé en ce qu'il comporte en outre :
- pendant la transmission, des premiers moyens de retard (4) pour appliquer un premier retard différentiel (Δ0, ... Δn-1) à chacun desdits premiers courants de signaux en parallèle (X0,...Xn-1), ledit premier retard différentiel étant différent d'un courant à un autre ;
- en réception, des deuxièmes moyens de retard (12) pour appliquer un deuxième retard différentiel (Δn-1, ...Δ0) auxdits deuxièmes courants de signaux en parallèle (Y0, ... Yn-1), de façon que la somme dudit deuxième retard différentiel et dudit premier retard différentiel soit constante et égale pour des courants correspondants desdits premiers courants de signaux en parallèle et deuxièmes courants de signaux en parallèle, la valeur de ladite somme contrôlant ladite distance minimale.

5. Système pour contrôler la distance minimale entre des erreurs successives dans une transmission radio numérique selon la revendication 4, caractérisé en ce que lesdits premiers moyens de retard (4) appliquent ledit premier retard différentiel (Δ0, ... Δn-1) augmentant progressivement d'un courant au suivant en fonction d'une loi croissante et lesdits deuxièmes moyens de retard (12) appliquent ledit deuxième retard différentiel (Δn-1, ...Δ0) diminuant progressivement en fonction d'une loi décroissante complémentaire.

6. Système pour contrôler la distance minimale entre des erreurs successives dans une transmission radio numérique selon la revendication 5, caractérisé en ce que ladite loi croissante applique des retards croissants de la même quantité fixe "dT", T étant le symbole du temps et ladite distance minimale Δ=nd, n étant le nombre de courants en parallèle.
